# EUROPEAN PATENT APPLICATION

(11) **EP 2 980 748 A1**
(43) Date of publication of application: **03.02.2016**
(21) Application number: 15179122.5
(22) Date of filing: 30.07.2015
(51) Int. Cl.: G06Q 40/08, G06Q 50/22

(54) **QUERYING MEDICAL CLAIMS DATA**

(30) Priority: 31.07.2014 US 201414449083
(71) Applicant: Palantir Technologies, Inc., Palo Alto, California 94301 (US)
(72) Inventor: Wang, Lekan, Palo Alto, CA California 94301 (US); Shinghal, Pallav, Palo Alto, CA California 94301 (US); Gateno, Isaac, Palo Alto, CA California 94301 (US)
(74) Representative: Dendorfer, Claus

(57) **Abstract**

Techniques are provided for querying medical claims data. In an embodiment, responding to selection of a health care fraud scheme template from among a plurality of health care fraud scheme templates by displaying a partial query statement defined by the selected health care fraud scheme template; and based on a parameter indicated by the selected health care fraud template, displaying at least one interface control element embedded within the partial query statement. An input indicating the value for the parameter of the partial query statement is received. Generating a converted query in a database querying language that a particular database system is configured to interpret based at least on the partial query statement, the parameter, and the specified value for the parameter. The particular database system is caused to execute the converted query to identify query results comprising health care data based on the converted query.

## Description

### CROSS REFERENCE TO RELATED APPLICATIONS

The present application claims priority to U.S. Patent Application No. 14/449,083 filed July 31, 2014, which is hereby incorporated by reference in its entirety for all purposes as if fully set forth herein.

### TECHNICAL FIELD

The present invention relates to data processing techniques for fraud detection in the context of health insurance.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Healthcare fraud accounts for an estimated $60-80 billion dollars/year in waste. Some estimate that the damages constitute 3-10% of all healthcare expenditures. One source of fraud is prescription drug fraud. Examples of prescription fraud include forging prescriptions, altering prescriptions, stealing prescription pads, calling in prescriptions or using online pharmacies, doctor/pharmacy shopping (for example, going to multiple doctors, emergency rooms, or pharmacies and seeking prescriptions while faking symptoms such as migraine headaches, toothaches, cancer, psychiatric disorders, and attention deficit disorder, or having deliberately injured oneself), going across state lines to seek fulfillment at multiple pharmacies, refilling prescriptions before ninety days, and so forth. Prescription fraud primarily occurs at retailer pharmacies, and primarily with narcotics, anti-anxiety medications, muscle relaxants, and hypnotics.

Other sources of fraud include insurance claims fraud such as a provider charging more than peers for services, a provider billing for more tests per patient than peers, a provider billing for unlikely or unnecessary medical procedures, upcoding of services or billing for the most expensive of options, upcoding of equipment or billing for a more expensive item and delivering a lower cost item, consistently billing for high cost medical equipment, such as Durable Medical Equipment, billing for procedures or services not provided, filing duplicate claims that bill for the same service on two separate occasions, unbundling a group of services so that the services billed one at a time yield more compensation than if they had been bundled together, kickbacks from referrals, transportation fraud, collecting money from multiple insurance providers, using surgical modifiers to increase reimbursement, fraud involving viatical health and life insurance, nursing home fraud such as lack of services rendered or services rendered by non-licensed professionals, and so forth.

Prescription claims, doctor office claims, medical procedure claims, hospital claims, medical equipment claims, and other medical claims (collectively referred to as medical claims or healthcare claims) may number in the millions or billions per year. And each medical claim may include numerous types of data, such as billing codes, patient identifier, location, service provider identifier, service date, and the like. Thus, while databases of medical claims contain vast amount of information, selectively mining the available information for useful purposes, such as to identify leads to potential fraudulent claims, is not a trivial task. Moreover, persons capable of properly constructing database queries are generally computer programmers or those trained in database querying languages, while persons capable of detecting fraud in medical claims (referred to as fraud analysts) tend to have limited or no familiarity in directly generating database queries. This disconnect between different persons using the medical claims database adds to the difficulty of medical fraud detection.

### SUMMARY OF THE INVENTION

The appended claims may serve to summarize the invention.

### BRIEF DESCRIPTION OF THE DRAWINGS

In the drawings:
- FIG. 1: illustrates an example system for automatically composing complex database queries according to some embodiments.
- FIG. 2: illustrates example additional details of the system of FIG. 1 according to some embodiments.
- FIG. 3: illustrates an example flow diagram for automatically composing and directing complex database queries implemented in the system of FIG. 1 according to some embodiments.
- FIGs. 4A-4D: illustrate example user interfaces implemented in the system of FIG. 1 according to some embodiments.
- FIG. 5: illustrates a block diagram of an example computer system upon which embodiments of the present disclosure may be implemented.

### DETAILED DESCRIPTION

In the following description, for the purposes of explanation, numerous specific details are set forth in order to provide a thorough understanding of the present disclosure. It will be apparent, however, that the present disclosure may be practiced without these specific details. In other instances, well-known structures and devices are shown in block diagram form in order to avoid unnecessarily obscuring the present disclosure.

### 1.0 General Overview

In an embodiment, a method comprising: responding to selection of a health care fraud scheme template from among a plurality of health care fraud scheme templates by displaying a partial query statement defined by the selected health care fraud scheme template; based on a parameter indicated by the selected health care fraud template, displaying at least one interface control element embedded within the partial query statement, the interface control element configured to receive input indicating a value for the parameter; receiving, via the at least one interface control element, input indicating the value for the parameter of the partial query statement; based at least on the partial query statement, the parameter, and the specified value for the parameter, generating a converted query in a database querying language that a particular database system is configured to interpret; causing the particular database system to execute the converted query to identify query results comprising health care data based on the converted query; and wherein the method is performed using one or more processors.

In an embodiment, the method further comprises wherein the partial query statement is in a natural language format that the particular database system is not configured to interpret.

In an embodiment, the method further comprises wherein the at least one interface control element is located at a specific location within the partial query statement.

In an embodiment, the method further comprises wherein the partial query statement provides context for a parameter type for the parameter.

In an embodiment, the method further comprises wherein receiving the input comprises receiving selection of the value for the parameter from among a pre-defined list of parameter values.

In an embodiment, the method further comprises wherein receiving the input comprises receiving a free form parameter value as the value for the parameter.

In an embodiment, the method further comprises wherein the particular database system includes a plurality of health care data records associated with health care service or product provider claims submitted for individual members, and wherein the query results comprise at least a portion of the plurality of health care data records.

In an embodiment, the method further comprises receiving selection of a sample dataset, the sample dataset comprising a subset of the plurality of health care data records having a known characteristic, and wherein causing the particular database system to execute the converted query to identify query results comprises identifying query results from the sample dataset.

In an embodiment, one or more transitory or non-transitory machine-readable media storing instructions which, when executed by one or more processors, cause: responding to selection of a health care fraud scheme template from among a plurality of health care fraud scheme templates by displaying a partial query statement defined by the selected health care fraud scheme template; based on a parameter indicated by the selected health care fraud template, displaying at least one interface control element embedded within the partial query statement, the interface control element configured to receive input indicating a value for the parameter; receiving, via the at least one interface control element, input indicating the value for the parameter of the partial query statement; based at least on the partial query statement, the parameter, and the specified value for the parameter, generating a converted query in a database querying language that a particular database system is configured to interpret; and causing the particular database system to execute the converted query to identify query results comprising health care data based on the converted query.

In an embodiment, the one or more transitory or non-transitory machine-readable media storing instructions which, when executed by one or more processors, further cause wherein receiving the input comprises receiving input from a user having no or limited knowledge of the database querying language.

In an embodiment, the one or more transitory or non-transitory machine-readable media storing instructions which, when executed by one or more processors, further cause receiving selection of at least one sample dataset, the at least one sample dataset comprising health care claims data having known attributes; wherein causing the particular database system to execute the converted query to identify query results comprises identifying query results from the at least one sample dataset.

In an embodiment, the one or more transitory or non-transitory machine-readable media storing instructions which, when executed by one or more processors, further cause receiving at least one query scheduling input associated with the partial query statement, the parameter, and the specified value for the parameter for a user; wherein causing the particular database system to execute the converted query is triggered in accordance with the at least one query scheduling input.

In an embodiment, the one or more transitory or non-transitory machine-readable media storing instructions which, when executed by one or more processors, further cause wherein the at least one query scheduling input comprises specifying a query execution frequency, a specific date to perform a query, or a query trigger condition.

In an embodiment, a system comprising: one or more databases including a plurality of health care claims data; a user interface component, at least partially implemented by computing hardware, configured to receive selection of a first pre-defined statement associated with a first health care claim fraud scheme from among a plurality of health care claim fraud schemes and to receive an indication of one or more parameter values for one or more interactive fields associated with the first pre-defined statement by the first health care claim fraud scheme, the first pre-defined statement provided in a natural language format, the one or more interactive fields located at locations within the first pre-defined statement, and the one or more parameter values customizing the first pre-defined statement; and a query generator component, at least partially implemented by computing hardware, configured to convert the first pre-defined statement and the one or more parameter values to a query in a database querying language and to search the one or more databases using the query.

In an embodiment, the system further comprising wherein the plurality of health care claims data is organized as at least one of health care service or product provider objects, patient objects, pharmacy objects, or health care event objects.

In an embodiment, the system further comprising a user-defined query access component, at least partially implemented by computing hardware, configured to receive input of at least one sample dataset, the at least one sample dataset comprising a subset of the plurality of health care claims data, and wherein the query generator component performs the search of the at least one sample dataset using the query.

In an embodiment, the system further comprising wherein the databases store the at least one search scheduling input, an identifier of the first pre-defined statement, the one or more parameter values, and a user identifier in association with each other.

In an embodiment, the system further comprising wherein at least one of the one or more parameter values comprises a percentage, a dollar amount, a quantitative value, a billing code, a conditional, a ratio, a logical expression, a fraction, or compound values.

In an embodiment, the system further comprising wherein one or more terms surrounding at least one of the one or more interactive fields provide semantic context for a type of parameter to be inputted to the at least one of the one or more interactive fields.

In an embodiment, one or more transitory or non-transitory machine-readable media storing instructions which, when executed by one or more processors, cause: receiving selection of a query template corresponding to a health care claim fraud scheme from among a plurality of health care claim fraud schemes, the query template including at least a first field at a specific location within the query template, and receiving at least a first parameter for the at least first field of the query template, the query template automatically providing natural language context for a type of parameter acceptable as the at least first parameter. The one or more non-transitory machine-readable media storing instructions which, when executed by one or more processors, further cause automatically converting the query template and the at least first parameter to a converted query in a database querying language, and automatically performing a search in a plurality of health care claims data using the converted query.

### 2.0 Structural Overview

Techniques are described herein for selectively mining data related to health care to facilitate fraud lead generation. In an embodiment, a programmatic method enables selection of a partially formulated query that is in a natural language or other non-technical format for a specific kind of fraud scheme, and further enables fully formulating a custom query in a natural language or other non-technical format by accepting user-defined parameters for the query. In an embodiment, a fraud lead generation system automatically converts a custom query that is in a natural language or other non-technical format into a query string in a database querying language that is compatible with databases comprising health care claim data collected from provider sources, insurer sources, public sources, and/or other sources. The system returns query or search results comprising health care claim data corresponding to the custom query, which may be reviewed for fraud lead generation. In an embodiment, the system additionally enables testing and refining custom queries in a natural language or other non-technical format against sample datasets and/or scheduling one or more database searches using the custom query. Among other aspects, the described systems and techniques permit use by users with little or no knowledge of database querying languages, and provide flexibility in specifying desired characteristics or attributes of the data to be mined even though the users are formulating the queries in a natural language, non-technical, non-database querying language, or non-database search compatible format. The systems and techniques further permit, among other aspects, improved speed and efficiency in fraud analysts' workflow, because they need not wait for generation of queries and performance of database searches by technical personnel. Among yet other aspects, the systems and techniques further provide a capability to easily expand and update the system over time to new or changing fraud schemes.

Various modifications to the embodiments will be readily apparent to those skilled in the art, and principles defined herein may be applied to other embodiments and applications without departing from the spirit and scope of the invention. Moreover, in the following description, numerous details are set forth for the purpose of explanation. However, one of ordinary skill in the art will realize that embodiments of the invention may be practiced without the use of these specific details. In other instances, well-known structures and processes are not shown in block diagram form in order not to obscure the description of the invention with unnecessary detail. Thus, the present disclosure is not intended to be limited to the embodiments shown, but is to be accorded the widest scope consistent with the principles and features disclosed herein.

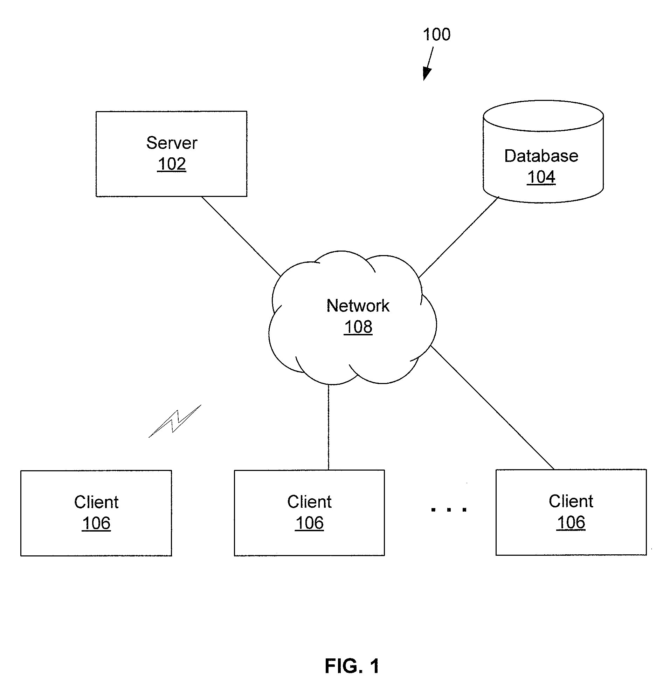

FIG. 1 illustrates an example system 100 in which the techniques described may be practiced, according to some embodiments. System 100 is a computer-based system. The various components of system 100 are implemented at least partially by hardware at one or more computing devices, such as one or more hardware processors executing instructions stored in one or more memories for performing various functions described herein. System 100 illustrates only one of many possible arrangements of components configured to perform the functionality described herein. Other arrangements may include fewer or different components, and the division of work between the components may vary depending on the arrangement.

System 100 includes a server 102, a database 104, one or more clients 106, and a network 108. Each of the server 102, database 104, and clients 106 is in wired or wireless communication with the network 108.

Server 102 comprises one or more servers, computers, processors, database servers, and/or computing devices configured to communicate with the database 104 and/or clients 106 via network 108. The server 102 facilitates fraud detection of medical claims data stored in database 104. Server 102 hosts one or more applications, websites, or other visual or user interface mechanisms related to use of medical claims data as described in detail below. Server 102 may be located at one or more geographically distributed locations. Although one server 102 is shown in FIG. 1, system 100 may, depending on the embodiment, comprise one, two, or any number of servers 102, which may work alone and/or collectively to provide the functionality described herein.

Database 104 comprises one or more databases or storage devices configured to store and maintain medical claims data, data associated with medical claims data, data associated with fraud detection or fraud detection lead generation, and/or instructions for use by server 102 and/or clients 106 as described herein. Database 104 may, in some embodiments, be located at one or more geographically distributed location relative to server 102. Server 102 and/or clients 106 may, in some embodiments, access database 104 via network 108. Alternatively, server 102 may access database 104 without needing network 108. As another alternative, database 104 may be included within server 102. System 100 may, depending on the embodiment, comprise one, two, or any number of databases 104 configured to individually and/or collectively store the data described herein.

Clients 106 comprise computing devices, including but not limited to, work stations, personal computers, general purpose computers, laptops, Internet appliances, hand-held devices, wireless devices, wired devices, portable devices, wearable computers, cellular or mobile phones, portable digital assistants (PDAs), smart phones, tablets, multi-processor systems, microprocessor-based or programmable consumer electronics, game consoles, settop boxes, network PCs, mini-computers, and the like. Each of the clients 106 includes applications, software, and/or other executable instructions to facilitate various aspects of the medical claim fraud detection techniques described herein. Clients 106 may also include additional applications or other interface capabilities to communicate with the server 102 and/or database 104. Clients 106 may, depending on the embodiment, be located geographically dispersed from each other. Although three clients 106 are shown in FIG. 1, more or less than three clients 106 may be included in system 100. Clients 106 are also referred to as devices, requesting devices, requesting clients, requesting machines, requestors, and the like.

Network 108 comprises a communications network, such as a local area network (LAN), a wireless LAN (WLAN), a wide area network (WAN), a wireless WAN (WWAN), a metropolitan area network (MAN), an ad hoc network, an intranet, an extranet, a virtual private network (VPN), a portion of the Internet, the Internet, a portion of a public switched telephone network (PSTN), a cellular network, or a combination of two or more such networks. When network 108 comprises a public network, security features (e.g., VPN/SSL secure transport) may be included to ensure authorized access within system 100.

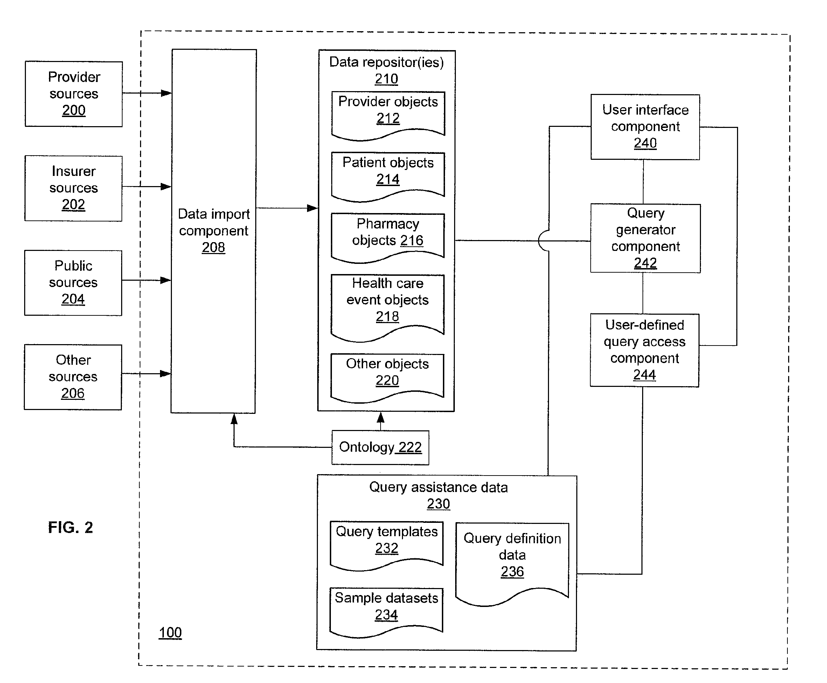

FIG. 2 illustrates example objects and components included in the system 100 according to some embodiments. The components are communicatively coupled (e.g., via appropriate interfaces) to each other and to various data sources, so as to allow information to be passed between the components and/or to share and access common data.

System 100 comprises a data import component 208 which collects data from a variety of sources, including one or more of provider sources 200, insurer sources 202, public sources 204, and other sources 206 as described herein. The data may be collected from each source 200-206 on one or on multiple occasions, depending on factors such as the size of the data source, the accessibility of the data source, and how frequently the data source changes. Depending on the form in which the data is collected, the data import component 208 may optionally perform Extract, Transform, and Load ("ETL") operations on the collected data to generate objects that conform to one or more defined ontologies 222. Ontologies 222 may be, for example, dynamic ontologies, static schemas, and/or other data structure definitions.

The data import component 208 causes the collected data to be stored in one or more repositories of data 210. The one or more repositories of data 210 may store, among other object types, some or all of: provider objects 212, patient objects 214, pharmacy objects 216, health care event objects 218, and other objects 220, each of which corresponds to a different discrete object type defined by the one or more ontologies 222. Other objects 220 may include any category of object type deemed desirable. For example, another object type may be administrative event objects. Thus, in an embodiment, data obtained from healthcare providers, insurers, public sources and other sources may be represented in computer storage using object-oriented data representation techniques to represent providers, patients, pharmacies, events, and other items as objects to be selectively queried to identify real-world relationships, events, or transactions suspected of fraud. Repositories 210 may be included in the database(s) 104. Repositories 210 may be collectively referred to as a medical claims repository. Examples of repositories 210 and corresponding objects 212-220 are described in subsequent sections. In some embodiments, the contents of repositories 210 may be organized as relational data.

System 100 also includes one or more of query assistance data 230. The one or more repositories of data 230 may store, among other object types, query templates 232, sample datasets 234, and/or query definition data 236, each of which may be utilized for querying the repositories 210 in connection with medical fraud detection lead generation. Query templates 232 are files or other data structures that store data representative of one or more pre-constructed partial search queries in a natural language format or a similarly readily understood non-technical format. Sample datasets 234 comprise select subsets of the objects 212-220 having certain known characteristics. Query definition data 236 comprises data describing user defined queries, such as query parameters defined by a user for use with the query templates 232, and optionally one or more additional user defined rules or other configuration data relating to such queries. Additional details concerning the query templates 232, sample datasets 234, and query definition data 236 are discussed below. Query assistance data 230 may be included in the database(s) 104, or separately (e.g., files within a file system).

System 100 further includes a user interface component 240 that provides a graphical user interface (GUI) to present information to and receive inputs from a user, such as a fraud analyst, at one of the clients 106. Information presented to the user may include at least a portion of the query templates 232, sample datasets 234, or objects 212-220, in accordance with the techniques set forth herein. Inputs that may be received from the user may include, for example, a selection or specification of a query template from among the query templates 232, a selection or specification of user defined parameters for the query template, a selection or specification of additional user defined inputs of configurations or options relating to querying medical claims data, or other user inputs, in accordance with the techniques set forth herein. A query generator component 242 generates a query capable of searching the objects 212-220 and/or sample datasets 234 based on query parameters specified by the selected query template and user defined parameters. The query generator component 242 automatically converts a query template and any user defined parameters into a query format or syntax compatible with the objects 212-220 and/or sample datasets 234. The query generator component 242 initiates execution of a search of the objects 212-220 and/or sample datasets 234 using the converted query to return query results to the user via the user interface component 240.

A user defined query access component 244 maintains the query definition data 236, which defines the queries formed using the user defined parameters and/or configuration data specified, via the user interface component 240, in connection with each user's selection of a query template to run a query against the objects 212-220. Depending on the query definition data 236, the query generator component 242 may be automatically triggered to run one or more subsequent searches after an initial query initiated by the user.

The query results presented to the user comprise identification and/or the content of particular objects within repositories 210 corresponding to at least portions of one or more medical claims that may be "leads" for fraudulent activity. The user analyzes the query results to identify leads suggestive of fraud, to refine the query, to test a potential lead, and/or for other fraud related purposes, in accordance with the techniques described herein.

In one embodiment, components 240-244 comprise one or more software components, programs, applications, or other units of code base or instructions configured to be executed by one or more processors included in the server 102. In other embodiments, the functionalities or operations of one or more of components 240-244 is handled by the client 106 or shared between the server 102 and client 106. As an example, the functionalities of the user interface component 240 may be provided by the client 106 while those of components 242-244 are provided by the server 102. Although components 240-244 are depicted as distinct components in FIG. 2, components 240-244 may be implemented as fewer or more components than illustrated. Any of components 240-244 may communicate with one or more devices included in the system 100, such as server 102, database 104, or clients 106.

### 3.0 Functional Overview

In an embodiment, the data objects and components depicted in FIG. 2 are used at various points of a workflow for identifying fraud. The first stage is lead generation. This stage involves identifying suspected cases of health care fraud for further investigation. A lead, as described herein, is a particular individual, organization, or event that is suspected as consisting of, relating to, or indicating actual or possible fraud, or is at an increased probability for consisting of, relating to, or indicating fraud. The term lead may also be used herein to refer to a data object that represents the suspicious individual, organization, or event. One way to identify leads is to receive tips concerning potentially fraudulent activities. A tip may come from a person or entity. Another way to identify leads is to review networks of individuals and/or organizations connected to instances of fraud described in media reports, indictments, or other publications. Another way to identify leads is to apply business rules to the various data objects and relationships described herein to flag potentially fraudulent activity, such as a male receiving treatment for ovarian cancer. Another way to identify leads is to identify outliers or other noticeable patterns outside the norm based on existing knowledge of healthcare consumption. Data objects associated with unusual values for these metrics may be investigated as leads.

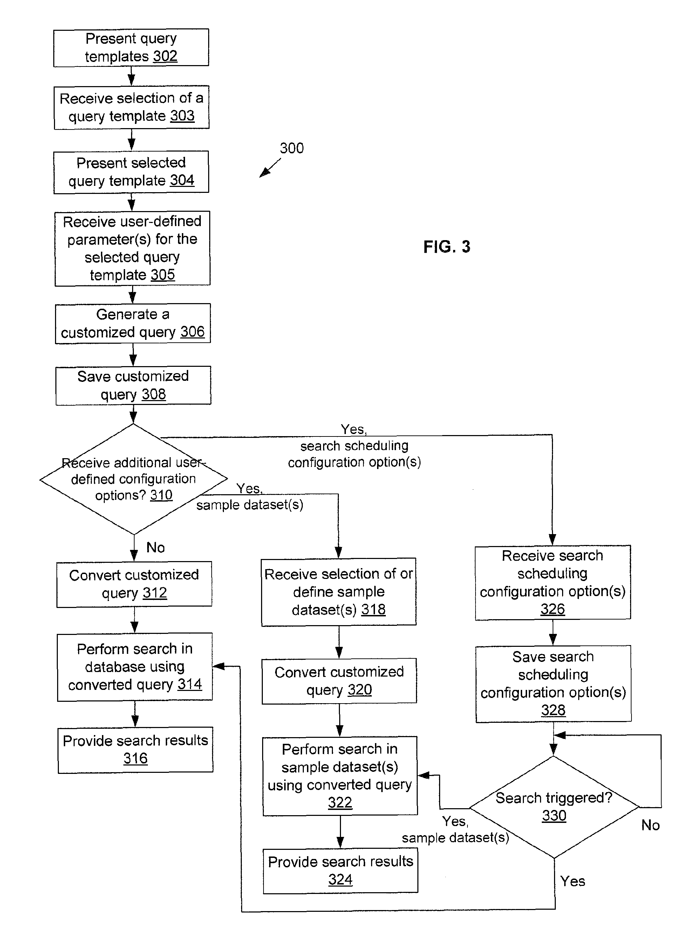

FIG. 3 illustrates an example flow diagram 300 for generating complex queries to search medical claims data stored in medical claims databases (e.g., repositories 210), according to some embodiments. The complex queries are automatically generated based on queries constructed by users unfamiliar with requisite database querying languages, such as Structured Query Language (SQL), for querying the medical claims databases. Such users are referred to as non-technical analysts, fraud analysts, non-technical users, and the like. The queries constructed by these users are in a non-technical format or other format readily comprehensible by those without computer programming or database querying language knowledge. The queries constructed by the users are automatically converted into query strings in a database querying language suitable for searching the medical claims databases. The query or search results comprise one or more medical claims, portions of one or more medical claims, and/or statistics or aggregations calculated based at least in part on one or more medical claims, which are analyzed by the users to identify leads for fraudulent medical claims activity.

In an embodiment, each of the processes described in connection with the functional blocks of FIG. 3 may be implemented using one or more computer programs, other software elements, and/or digital logic in any of a general-purpose computer or a special-purpose computer, while performing data retrieval, transformation and storage operations that involve interacting with and transforming the physical state of memory of the computer.

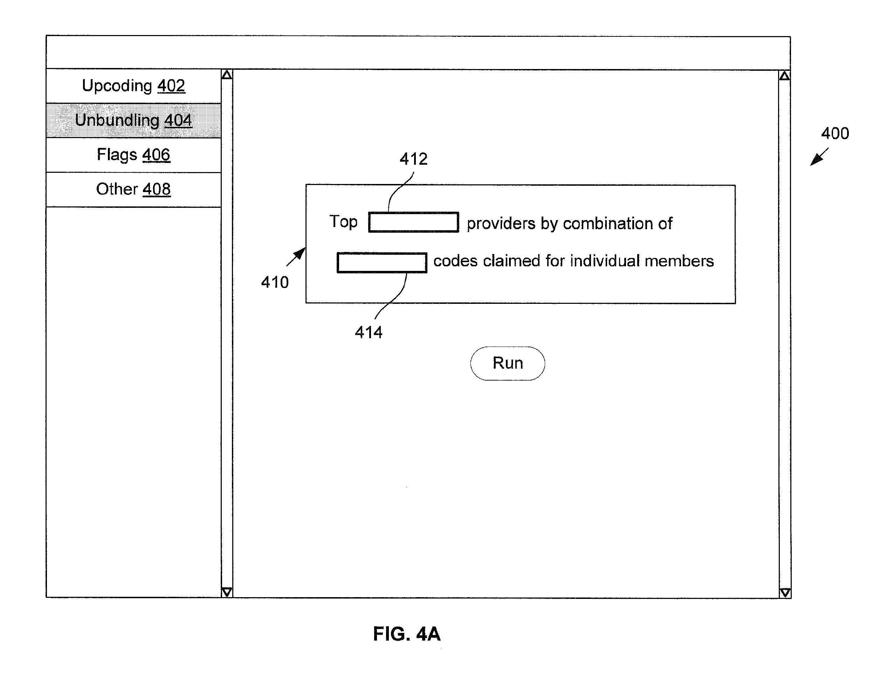

The flow diagram 300 of FIG. 3 is described below in conjunction with the objects and components of FIG. 2 and an example user interface illustrated in FIGs. 4A-4D.

In block 302, the user interface component 240 presents a plurality of query templates in a graphical user interface (GUI). Block 303 comprises receiving a selection made by a user of a particular query template from among the plurality of query templates. In an embodiment, the GUI may be displayed for a user interfacing with one of the clients 106. The plurality of query templates correspond to those pre-specified in the query templates 232. Each of the plurality of query templates is associated with a fraud scheme.

A variety of fraud schemes exist such as, but not limited to, upcoding, unbundling, data flagged by statistical outlier and rule-based claim flagging system(s), medically unnecessary procedures, excessive or unlikely utilization, and stolen identity or frequent flyer behavior. Upcoding is the practice of submitting a medical claim including a billing code that results in a higher reimbursement rate than the actual service performed. Unbundling refers to the practice of using two or more billing codes instead of one inclusive code because billing services individually rather than as a group, even though the services were performed in the same procedure or doctor visit, results in overall higher reimbursement. Unbundling also refers to the practice of submitting multiple medical claims in order to obtain a higher reimbursement for services that were performed within a specified time period and which should be submitted as a single medical claim. Statistical outlier and rule-based claim flagging system(s) process health care claims and/or items within health care claims for statistical deviations from the norm and/or pre-encoded rules, and flag health care claims and/or items therein that are statistical deviations. Medically unnecessary procedures comprise patient members receiving procedures that are not warranted given their condition, but which are billed for reimbursement by health care service and/or product providers. Excessive or unlikely utilization comprises health care service and/or product providers submitting claims for an unusually large amount for a procedure or drug, typically benchmarked against maximum recommended values. Stolen identity or frequent flyer behavior comprises providers (including pharmacies) submitting claims on behalf of patient members without their consent via misappropriation of patient member identity information (e.g., identity theft). For each known, common, or suspected fraud scheme, one or more query templates can be provided. For example, if a fraud scheme has more than one (significant) variant, a unique query template can be provided for each of the variants.

FIG. 4A illustrates an example GUI or visual interface for non-technical analysts to formulate complex queries to search medical claims for specific kinds of fraud schemes, according to some embodiments. GUI 400 is one example interface that may be provided to practice the described techniques. Other suitable interfaces may comprise additional or fewer elements, in varying arrangements. A GUI 400 includes a graphical representation of a plurality of fraud schemes, including an upcoding fraud scheme icon 402, an unbundling fraud scheme icon 404, and a flags-based fraud scheme icon 406. GUI 400 further comprises an other fraud scheme icon 408 to add additional fraud scheme(s). The unbundling fraud scheme icon 404 is shown highlighted in GUI 400, indicative of the user's selection of the unbundling fraud scheme.

In response to the user's selection of the unbundling fraud scheme icon 404, a query template 410 corresponding to the unbundling fraud scheme is shown presented to the user. In alternative embodiments, if there are more than one query template for a given fraud scheme of interest, GUI 400 provides additional selection prompts for the user to select one query template from among the query templates for the given fraud scheme of interest. In block 304, responsive to the user selection in block 303, the user interface component 240 and/or in conjunction with the query generator component 242 is configured to access the particular query template from query templates 232 corresponding to the user selection. One or more pre-processing and/or interface configuration activities may take place to appropriately present the selected query template to the user. For example, components 240 and/or 242 may identify or appreciate which portion(s) of the query template is static (e.g., text) and which is interactive (e.g., data to be supplied by the user); for each of the interactive portions, may additionally identify possible constraints, lists of possible values, or other defining attributes; generate interface control element(s) to receive user input specific to and for each of the interactive portion(s); and display the static portions with the interactive portions in an arrangement as defined by the particular query template.

Each query template comprises a logical statement including placeholder locations for the user to specify and/or define one, two, three, or more parameters of a query. The logical statement is expressed in a natural language syntax that is readily understandable by non-technical persons. The logical statement may be a phrase, a sentence, more than one sentence, or a paragraph. The logical statement is constructed to express what the user wants to search for in everyday syntax rather than in a database query language-specific syntax and format. The logical statement is further constructed so that context is automatically provided for the type of parameter input needed at the placeholder locations to compose a complete query. In an embodiment, the semantic context of the surrounding terms of the logical statement automatically guides the user as to what the parameter should be for each of the placeholder locations. The placeholder locations within the logical statement are also located at specific positions within the logical statement to form proper syntax with the surrounding terms and the overall logical statement. In an embodiment, a query template may be considered to be a data structure that comprises, encapsulates, or represents a partial query, a partial sentence, a partially completed sentence, a rule, a rule sentence, a rule template, a natural language rule, a natural language query, a non-technical query, or similar instructions or logic.

Returning to FIG. 4A, the selected query template 410 includes a first interactive field 412 and a second interactive field 414. The first and second interactive fields 412, 414 may also be referred to as interface control elements embedded within the query template 410. At least the terms "top" and "providers" surrounding the first interactive field 412 are static text defined by the template to provide context as to the parameter type being requested for the first interactive field 412. The depicted interface allows for a user to select a pre-defined numerical value, such as, five, 10%, or the like. Similarly, at least the terms "combination of" and "codes" surrounding the second interactive field 414 are static text defined by the template to provide context as to the proper parameter type for the second interactive field 414. The depicted interface allows a user to enter two or more billing codes associated with respective individual services or products for which an inclusive billing code exists.

As shown in FIG. 4A, an example of a query template for the unbundling fraud scheme icon 404 is: Top _providers by combination of_ codes claimed for individual members. An example conversion in machine-readable format corresponding to this example is shown below. Although the corresponding conversion below is in source XML/script/format, the completed query sentence can be represented in any of a variety of machine-readable formats that is compatible with health care database systems.

```
       SELECT provider,
       Count(1) as instances
       FROM
       (SELECT provider,
       Patient,
           date
       FROM claims
       WHERE procedure = {bundleCodel}) as a
       INNER JOIN
       (SELECT provider,
       Patient,
           date
       FROM claims
       WHERE procedure = {bundleCode2}) as b
       ON (a.provider = b.provider and a.member = b.member and a.date = b.date)
       GROUP BY provider
       ORDER BY instances DESC
       LIMIT {numberOfProviders}
```

An example of a query template for the upcoding fraud scheme 402 is: Providers whose ratio of_ codes claimed over claims with codes _is at least _standard deviations greater than the mean. An example conversion in machine-readable format corresponding to this example is shown below. Although the corresponding conversion below is in source XML/script/format, the completed query sentence can be represented in any of a variety of machine-readable formats that is compatible with health care database systems.

```
      WITH base AS (
       SELECT provider,
                Sum(case when procedure = {claimedCode} then 1 else 0 end)/ count(1)
       as pct
       FROM claims
       WHERE procedure in {listOfLowerCodes}
       GROUP BY provider
       ),
       agg AS (
       SELECT avg(pct) as mean, stddev(pct) as stddeviation FROM base
       )
       SELECT provider, pct FROM base INNER JOIN agg ON (base.pct >= (agg.mean
      + {numDeviations}*agg.stddevation)) ORDER BY pct DESC
```

If the user clicks on or otherwise actuates any of the other fraud scheme icons (e.g., upcoding fraud scheme icon 402 or flags-based fraud scheme icon 406), a corresponding query template (such as set forth above) is presented to the user in the GUI 400.

In block 305, the user interface component 240 receives user-defined parameter(s) for the query template rendered in block 304. For instance, the user may input parameter values within the interactive fields included in the selected query template to customize or complete a search query. The parameter values may be selected from a pre-defined list and/or entered in free form. Parameter values for respective interactive fields of the query template may be specified from pre-defined choices, specified at will, combinations of both, or may vary from one query template to another query template. Acceptable parameter values may be specific to each interactive field. For example, one interactive field may accept percentage values, dollar amounts, or other quantitative values, while another interactive field may specify billing codes, conditionals, ratios, compound values, logical expressions, or the like. A pre-defined list of values and/or constraints on acceptable free-form values may be specified by the template, calculated based on data types expected for a selected parameter, populated based on actual data within the data repositories 210 for a selected parameter, calculated based on pre-defined metrics or business rules, and so forth.

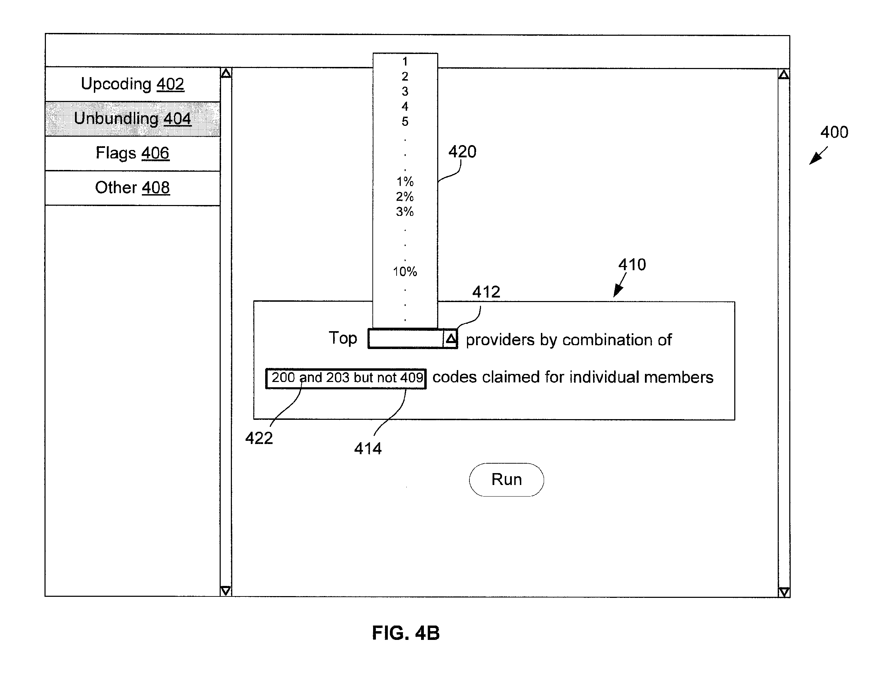

FIG. 4B illustrates example interface controls for entering parameters in the example GUI 400, according to an embodiment. Specifically, a dropdown list 420 is displayed for the first interactive field 412, from which the user may specify a parameter. Furthermore, a free form parameter 422 has been entered for the second interactive field 414. In some embodiments, the GUI 400 may include tips, guidelines, examples, or other information for the user to input acceptable parameters for the interactive fields, which may be defined by the template.

In other embodiments, the selected query template may define a set of parameter types for at least one of the interactive fields. The user selects a parameter from among the set of parameter types for the given interactive field. And then the user may also specify, in addition to selecting a parameter, a value for the selected parameter.

The selected query template and user-defined parameter(s) are used by the query generator component 242 to generate a customized query in block 306. The user-defined query access component 244 facilitates saving the customized query or parts of the customized query sufficient for later retrieval or use (e.g., identification of the selected query template and the user-defined parameter(s)) in block 308. The customized query or parts thereof are saved in the query definition data 236. Metadata such as a user identifier, time and date stamp, or other configuration data associated with the customized query may also be included in the query definition data 236.

In some embodiments, the lead generation environment optionally exposes controls for receiving specification of additional user defined configuration options for the customized query in block 310. If no additional options are specified, flow proceeds along the no branch of block 310 to block 312, in which the query generator component 242 automatically converts or translates the customized query generated in block 306 from a non-technical format to a database query language format suitable for searching the data repositories 210. The conversion may include conforming to the database query language syntax and other requirements for correctly structuring a query against the objects stored within the data repositories 210.

The query generator component 242 includes or is in communication with a templating engine that specifies acceptable parameter values for one or more interactive fields of a query template. As an example, an array of acceptable parameter values for a given interactive field may be defined when a query template, including the particular interactive field, is constructed. When the customized query is converted to a database-compatible query, such as a SQL statement, a set of one or more MapReduce tasks, or a database command in any other suitable format, the query references or incorporates the user-defined parameters in the interactive fields of the selected query template to run the query on the medical claims data. The query templates may also facilitate validation of the input query parameters by specifying constraints on the kind of value (e.g., percentage, dollar amount, medical claim code, etc.) that is acceptable.

The converted query from block 312 is then used by, for example, a database server, search execution framework, or other component capable of executing a search to search the medical data objects within the data repositories 210 in block 314. The database server, search execution framework, or other search capable component is included in a database system capable of searching a repository of data using the specified query. As a result of the searching, a set of search results are identified based on the searching, using any suitable searching technique. In block 316, the search results are provided to the user via the user interface component 240.

Depending on the query and/or the embodiment, the identified search results may be, for instance, all results that exactly match criteria of the query, or a certain number of results that nearly or best match criteria of the query, such as results having a relevance score within a certain threshold or a specified number of results with tone highest relevance score (e.g., 100 most relevant matches). The search results comprise at least one or more records from the medical claims data, portions of such records, and/or statistics or other information calculated based on the medical claims data, depending on the query. For instance, each of the search results may comprise a portion of a medical claim, such as the provider's name. Or each of the search results may comprise a link to the medical claim, an image or report generated from the medical claim, or a medical claim identifier.

The search results may be displayed in a GUI, such as GUI 400, that includes various interface elements that allow a user to review the search results and identify fraud leads based thereon. For instance, the GUI may feature interface controls for arranging search result data using various data visualization techniques, such as network-based graphs, charts, tables, reports, and so forth. The GUI may further include controls for filtering or sorting results based on metrics of interest or other criteria, and/or for requesting further information relevant to a search result of interest. In some embodiments, the user interface component 240 includes additional functionalities to move or share the search results to fraud investigative platforms for further review and analysis of at least a portion of the search results.

In an embodiment, flow may instead proceed from block 310 to block 318, in which the user interface component 240 receives one or more sample datasets specified by the user against which to perform the search. The user may select one or more sample datasets from a plurality of sample datasets pre-defined in the sample datasets 234. Alternatively, the user may define one or more new sample datasets not in the sample datasets 234. Each sample dataset comprises a subset of the objects in the data repositories 210 that are known to have a certain characteristic, and thus can be used to test the viability of a fraud lead identification theory expressed in the customized query in block 306. Newly defined sample datasets may be added to the sample datasets 234 to be used by any future users. The sample dataset(s) specified by the user are recorded in at least the query definition data 236 in association with the particular user.

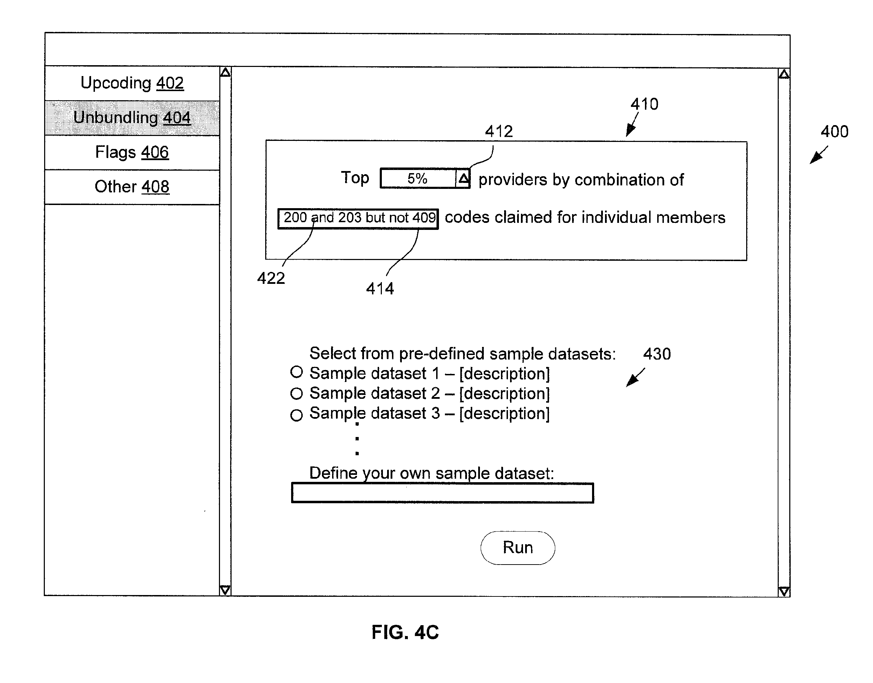

For instance, FIG. 4C illustrates an embodiment in which the example GUI 400 includes a sample dataset selection option 430, which permits the user to select from among a plurality of pre-defined sample datasets and/or define a new sample dataset. The sample dataset selection option 430 is shown in a same window as the selected query template 410. However, in other embodiments, the sample dataset selection option 430 may be presented in one or more different windows than the selected query template 410, or include different informational and selection options than those shown in FIG. 4C.

In block 320, the customized query is converted or translated as described above in connection with block 312. The converted query is used to search the user-specified one or more sample datasets in block 322, similar to as described in block 314. The corresponding search results are provided to the user via the GUI in block 324, as in block 316. Because the user ran the search against a known dataset, the user is able to discern from the search results whether the customized query works as intended. In some embodiments, the user may iteratively refine a query by testing it against successive sample datasets and/or by searching a given sample dataset using successively refined queries. Once the user is satisfied with the customized query, the broader dataset (e.g., the medical claims data in repositories 210) can be searched with higher confidence of obtaining desired search results. In an embodiment, flow may proceed from block 310 to block 326, in which one or more search scheduling options may be defined. The user defines options such as, but not limited to, a search frequency (e.g., daily, weekly, monthly, each quarter, etc.), a specific date to perform a search (e.g., state date and end date), a search trigger condition (e.g., a number of new medical claims data added to repositories 210 above a threshold, new medical claims data added to repositories 210 from a certain provider or for a certain billing code, etc.), an "update on data change" schedule (e.g., automatically re-running the customized query when the medical claims data is added or changes in repositories 210), or other search configuration options associated with when or how often to automatically perform a search using the customized query. The options are stored in the query definition data 236 in block 328. Thus, a one-time query or a series of queries can be performed.

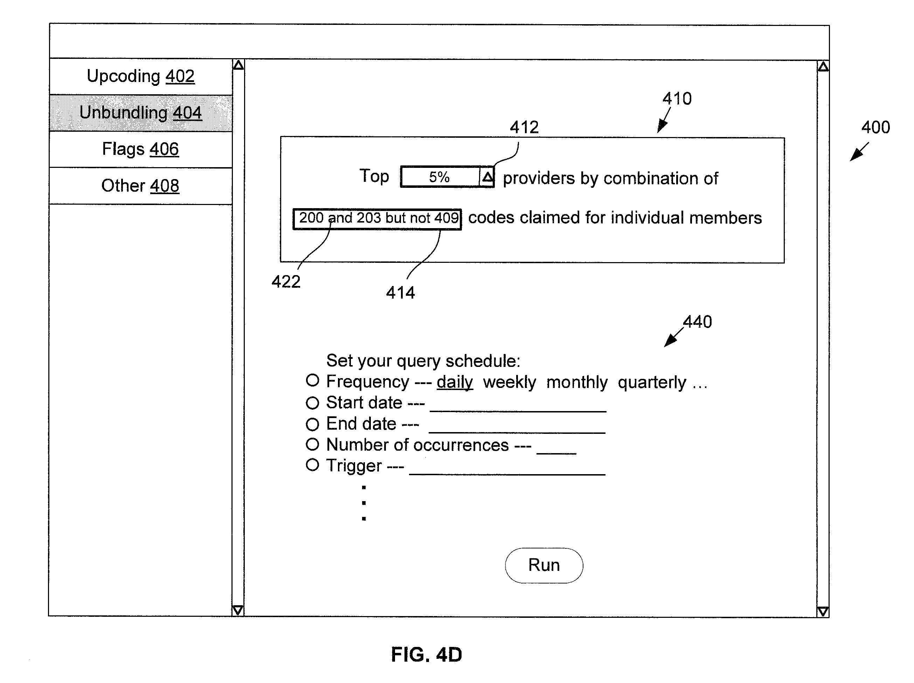

For instance, FIG. 4D illustrates the example GUI 400, in which a query scheduling control 440 is exposed, which permits the user to specify a schedule for running the query according to some embodiments. The query scheduling control 440 is shown in a same window as the selected query template 410. However, in other embodiments, the query scheduling control 440 may be presented in one or more different windows than the selected query template 410, and/or include different informational and selection options than those shown in FIG. 4D.

With this information, a job queue may be generated for the user. The query generator component 242 may automatically search the repositories 210, or sample datasets if so specified by the user, in accordance with the customized query and search schedule. When, at block 330, a search is triggered based on the search schedule options, the query generator component 242 initiates a search using the customized query, and flow proceeds to block 314 or 322 accordingly. In an embodiment, search results identified from a scheduled query may be temporarily or permanently stored (e.g., in the data 230). The user may optionally be notified of the latest search results through an email or other suitable message. A user may then request to view the search results through any suitable interface for viewing search results. If the user is logged in to or otherwise already accessing such an interface when the search is triggered, the search results can be presented to the user in real-time or near real-time. Otherwise no search is triggered (no branch of block 330) and the job queue remains unchanged until the next search is triggered.

In some embodiments, the user interface component 240 provides features for the user to view his or her job queue; modify the job queue by modifying a customized query, sample dataset, or search scheduling options; specify how to receive the search results; and/or other access features relating to automatically initiated search jobs. Changes to the job queue are handled and stored by the user-defined query access component 244.

In this manner, among other aspects, a mechanism is provided for easily defining complex queries to search medical claims databases for specific kinds of fraud schemes. Users, especially non-technical users such as fraud analysts, can easily and quickly construct queries and perform searches without having knowledge of database querying languages. For instance, a query can be iteratively improved by running against sample datasets to test and refine a "theory" that a particular billing pattern is indicative of fraud. Query jobs can also be scheduled to periodically extract a relatively small number of leads from among billions of lines of medical claims. Thus, rather than requiring a non-technical fraud analyst to come up with a theory of a potentially fraudulent behavior, and attempt to communicate that theory to a person technical enough to generate a query in a database querying language to test that theory, the efficiency of the non-technical analyst's workflow is improved by self-performing the query construction, refinement, and running details.

### 4.0 Data Architecture

The techniques described herein may be practiced with respect to medical claims data stored using a variety of different data structures and/or formats, depending on the embodiment. Example searchable data structures for storing medical claims data and other ancillary data records are described below. However, the examples given below are for illustrative purposes only, and the techniques described herein are not limited to any particular structures or formats.

In an embodiment, health care event objects are maintained in a health care event repository comprising one or more databases that store the health care event objects, provider objects are maintained in a provider repository comprising one or more databases that store the provider objects, patient objects are maintained in a patient repository comprising one or more databases that store the patient objects, and pharmacy objects are maintained a pharmacy repository comprising one or more databases that store the pharmacy objects. Other repositories may exist for other types of data objects. The one or more databases that constitute a repository may overlap between some or all of the repositories. Or, the repositories may be maintained separately.

In an embodiment, each of the objects described above, and other objects described herein, are generated from import operation(s) of data from various sources, such as an insurer's databases, a provider's health care records, pharmacy records, government records, and other public records. The import operation may be repeated periodically or on occasions to update the objects and/or add new objects. The import operation may involve various ETL operations that normalize the source data to fit data models such as described herein.

In an embodiment, some or all of the objects described herein are not necessarily stored in any permanent repository, but are rather generated from the source data "on demand" for the purpose of the various analyses described herein.

### 4.1 Logical Object Types

In an embodiment, a data object is a logical data structure that comprising values for various defined fields. A data object may be stored in a variety of underlying structure(s), such as a file, portions of one or more files, one or more XML elements, a database table row, a group of related database table row(s), and so forth. An application will read the underlying structure(s), and interpret the underlying structure(s) as the data object. The data object is then processed using various steps and algorithms such as described herein.

In one embodiment, the modeled object types conceptually include, without limitation: claim objects, such as medical physician claims, medical outpatient claims, medical inpatient claims, and pharmacy claims; patient objects; provider/prescriber objects; prescription objects; pharmacy objects; and fraud objects. Many variations on these combinations of objects are possible.

### 4.2 Sources

In an embodiment, some or all of the health care data objects are generated from source data hosted by a variety of sources. Example sources include provider or insurer sources such as: a claims processing database; a policy administration database, a provider network database, a membership / eligibility database, a claim account database, a pharmacy benefit database, a lab utilization gateway database, pharmacy claims database, an authentication call list, a tip-off hotline database, and a billing/accounts receivable database. Example sources further include government or public data repositories such as public health records, repositories of USPS zip codes, National Drug Codes, Logical Observation Identifiers Names and Codes, and/or National Provider Identifiers, an OIG exclusion list, and a List of Excluded Individuals/Entities. Of course, many other sources of data are also possible.

### 4.3 Databases

In an embodiment, data from the various data sources are passed through an ETL layer to form a set of databases. For example, the databases may include: Product, Organization, Geography, Customer, Member, Provider, Claim Statistics, Claim Aggregation, Claim Financial, Pharmacy Claims, Lab Results, and Revenue. The databases may store the various data objects described herein. The data objects may instead be arranged in a variety of other configurations.

### 4.4 Example Ontology

In an embodiment, an ontology for preventing health care fraud comprises the some or all of the following data object types: Claim objects, Drug objects, Member objects, Pharmacy objects, Plan Benefit objects, Prescriber objects, and Provider objects.

Each claim object represents a health care claim, which is a request for reimbursement from an insurer for health care expenses. There may be multiple types of claim objects, including claims objects for prescriptions, claim objects for laboratory tests, claim objects for medical procedures, and claim objects for other types of services. In an embodiment, a claim object comprises, among other elements, values for one or more the following types of attributes: unique system identifier(s), associated member identifier, allowed amount, claim status (paid, rejected, or reversed), date submitted, covered Medicare Plan D amount, date of service, estimated number of days prescription will last, paid dispensing fee, prescribed drug identifier, ingredient cost paid, mail order identifier, non covered plan paid amount, number of authorized refills, other payer amount, member plan type, amount paid by patient, deductible amount, pharmacy system identifier, prescriber system identifier, prescription written date, quantity dispensed, prescription claim number, service fee (the contractually agreed upon fee for services rendered), total amount billed by processor. Different fields may be specific to different types of providers or claims.

Each drug object represents a specific drug. In an embodiment, a drug object comprises, among other elements, values for one or more the following types of attributes: unique system identifier(s), American Hospital Formulary Service Therapeutic Class Code, generic status indicator (brand name or generic), drug name trademark status (trademarked, branded generic, or generic), dosage form, DEA class code, generic class name, over-the-counter indicator, drug strength, generic code number, generic code sequence, generic product index, maintenance drug code, product identifier qualifier, product service identifier, unit of measure, National Drug Code, and so forth.

Each member object represents a specific member of a health care plan. There may be multiple collections of members for different insurers and/or types of plans, and each collection may have a different structure. In an embodiment, a member object comprises, among other elements, values for one or more the following types of attributes: one or more unique system identifiers, maximum service month, the number of months enrolled in each particular year covered by the data (e.g. a different field for 2007, 2008, and so forth), first name, last name, gender, date of birth, address, city, state, zip code, county, telephone, social security number, additional address and other contact fields for different types of contact information (e.g. work, temporary, emergency, etc.), a plan benefit system identifier, an enrollment source system, and so forth.

In an embodiment, a member object may further include or be associated with tracking data that log changes to values for the above attributes over time. For example, a separate Member Detail object may exist, values for the above attributes for each month or year the member was covered by a plan. Each Member Detail object may include a month and/or year attribute and a member identifier to tie it back to its associated Member object.

Each pharmacy object represents a specific pharmacy. In an embodiment, a pharmacy object comprises, among other elements, values for one or more the following types of attributes: unique system identifier(s), pharmacy dispenser class (independent, chain, clinic, or franchise, government, alternate), pharmacy dispenser type (community/retail, long term, mail order, home infusion therapy, non-pharmacy, Indian health service, Department of Veterans Affairs, institutional, managed care, medical equipment supplier, clinic, specialty, nuclear, military/coast guard, compounding), affiliate code, service provider identifier, service provider identifier qualifier, and so forth.

Each plan benefit object represents a specific plan benefit. In an embodiment, a plan benefit object comprises, among other elements, values for one or more the following types of attributes: unique system identifier(s), contract number, provider identifier, start date, end date, package key, and so forth.

Each prescriber object represents a specific prescriber of drugs. In an embodiment, a plan benefit object comprises, among other elements, values for one or more the following types of attributes: unique system identifier(s), first name, last name, prescriber identifier(s), prescriber identifier qualifier(s) (e.g. not specified, NPI, Medicaid, UPIN, NCPDP ID, State License Number, Federal Tac ID, DEA, or State Issued), specialty code, and so forth. Prescriber objects and provider objects may in some cases represent or be associated with a same real world entity, but prescriber objects reflect data from a different source than provider objects. In some embodiments attributes from prescriber objects and provider objects may be combined into a single object. In other embodiments, the two objects are logically separate, but can be correlated together if they do in fact represent the same entity.

Each provider object represents a specific provider of health care services. In an embodiment, a provider object comprises, among other elements, values for one or more the following types of attributes: medical provider identification number (both text and numeric), provider type (medical professional, healthcare organization), provider status (active contract or no activate contract), various contract line indicators, one or more process exception hold effective dates, one or more process exception type codes, a date that the medical provider identification number was created, a date the provider record became inactive, an organization type code to indicate provided services or specialties, a Medicare identifier, provider medical degree, provider primary specialty, last name, first name, middle initial, name suffix, middle name, gender, social security number, federal tax identifier, date of birth, graduation date, medical school, credential status code, credential description, current credential cycle, current credential type (initial, re-credential, hospital-based, delegated, alliance, discontinued, empire initial, excluded from process, terminated), credential indicator, credential organization identifier, credential organization accreditation date, credential organization indicator, universal provider identifier, bill type (HCFA, UB92, UB04, composite), provider information source, provider claims classifier, email, last update type, address, and so forth.

Additional data objects that may be in a health care ontology are set forth in the attached appendix.

### 4.5 Metrics

Various example metrics for automatically identifying, prioritizing, and/or investigating leads are described below. In an embodiment, metrics may be utilized in formulating certain searches, such that claim records may be located based on how various claim attributes compare to various metrics. In an embodiment, metrics may be directly searchable. In an embodiment, metrics may be calculated and displayed in various visualization interfaces associated with search results. For instance, metrics may be calculated for a set of search results, and/or data from a search result may be compared to metrics for a group of records at large. Metrics may be calculated and stored periodically, or calculated on demand.

Metrics related to member objects may include, without limitation, one or more of: an average and/or standard deviation of Schedule 2 prescriptions per month; a count of drug abuse diagnoses; a count, average, and/or standard deviation of ER visits per year; a count of distinct providers that have written prescriptions for the member; a count of distinct pharmacies that have filled prescriptions for the member; a sum amount paid by an insurer on behalf of the member; an average and/or standard deviation amount paid per month; a sum number of pills dispensed per month; an average days between prescriptions; an average and/or standard deviation prescriptions per month for the member; an average and/or standard deviation for member medical claims per month; a count of total Schedule 2 prescriptions; a count of total Schedule 3 prescriptions; a count of total prescriptions; an average and/or standard deviation for net amount paid per diagnosis category; a count of durable medical equipment claims; a count of methadone overdoses; a count of opiate poisoning; a methadone dependence indicator; and/or a sum DME Net Amount paid.

Metrics related to provider objects may include, without limitation, one or more of: an average and/or sum total billed by provider; a sum net amount paid to the provider; an average and/or standard deviation net amount paid per month; a standard deviation for net amount paid per month by specialty; a standard deviation for net amount paid per month by specialty by geography, an average prescription pill quantity; an average prescription number of refills; a count of prescription claims not paid; a count of prescription claims; a count of medical claims; an average and/or standard deviation for prescription claims per patient; an average and/or standard deviation for medical claims per patient; a percentage of Schedule 2 drugs; a percentage of Schedule 3 drugs; a percentage of Schedule 2 drugs by specialty; a percentage of Schedule 3 drugs by specialty; a count of distinct patients of the provider; a count of distinct pharmacies to which patients of the provider are sent; a standard deviation of distinct diagnoses made by the provider by specialty; a count of distinct procedures performed by the provider; a count of clinic ownerships; a standard deviation for net amount paid to the provider by diagnosis; a count of durable medical equipment prescriptions made; a percentage of in-network claims attributed to the provider; and/or an estimated total days in business.

Metrics related to provider objects may further include, without limitation, one or more of: average claims per day; average net amount paid per claim; average net amount paid per month; average patient count; average pharmacy count; distinct count of diagnoses; a histogram of diagnoses; distinct count of procedures; and/or a histogram of procedures.

Metrics related to pharmacy objects may include, without limitation, one or more of: average net amount paid by the insurer; maximum and/or average net amount paid per prescriber; count of claims; percentage of filled prescriptions that involved a Schedule 2 category of drugs; percentage of filled prescriptions that involved a Schedule 3 category of drugs; average and/or sum dispensing fee; days in business, percentage of filled prescriptions that involved a brand name drug; a count of distinct drug names in the prescriptions; percentage of filled prescriptions that involved a high reimbursement drug; percentage of filled prescriptions that involved a drug of potential abuse; a percentage of claims for refills; average and/or standard deviation distance traveled by customers to the pharmacy; a count of co-located pharmacies; percentage of filled prescriptions that involved small refills; percentage of claims that were reversed; a count of claims not paid; average billed per patient; average billed per prescriber; average claims per patient; average claims per prescriber.

Metrics related to diagnosis objects may include, without limitation, one or more of: a histogram of CPT-4, ICD-9, ICD-10 or HCPCS procedures; a histogram of co-occurring diagnoses; average net amount paid per year per patient; average total net amount paid per patient; a histogram of drug names prescribed; an indicator of drug abuse; and/or an indicator of drug-seeking behavior.

Metrics related to procedure objects may include, without limitation, one or more of: a histogram of diagnoses; a histogram of co-occurring procedures on the same date per patient; and a total, average, minimum, and/or maximum procedure count per patient per diagnosis. Metrics related to drug objects may include, without limitation, one or more of: maximum drug quantity per patient per year; and/or minimum, maximum, and/or average net amount paid.

Metrics related to prescription claim objects may include, without limitation, one or more of: distance traveled to pharmacy; distance traveled to prescriber; an indicator of whether the prescription is for a drug of abuse; a standard deviation of net amount paid; an indicator of whether the prescribed patient's gender is appropriate to the prescription; an indicator of whether the prescription claim is for an expensive branded drug; and/or an indicator of whether the prescription claim is for a Schedule 2 commonly abused drug.

Metrics related to medical claim objects may include, without limitation, one or more of: distance traveled to physician; an indicator of whether the claim is indicative of drug abuse; and/or a standard deviation of net amount paid per procedure.

In an embodiment, various triggers may be generated based on the above metrics. The triggers are monitored functions of one or more of the metrics. When a monitored function has a value that is within a particular range, the trigger identifies one or more lead objects that are associated with the one or more metrics.

For example, in an embodiment, triggers may include members visiting three of more independent pharmacies in a day, members obtaining prescriptions in three of more states within a month, or members receiving multiple and subsequent home rental medical equipment. Each of these triggers would produce a member lead object. Another example trigger is multiple new patient office visits for the same patient in a three year period. This trigger would produce a member lead object.

An additional example of a trigger is a Top Pharmacies by Drugs Commonly Abused trigger. For each month, this trigger lists the pharmacy that has dispensed the most amount of one of the commonly abused drugs. An additional example of a trigger is a Top Patients Receiving Drugs Commonly Abused trigger. For each month, this trigger lists the patient receiving the most amount of one of the commonly abused drugs. An additional example of a trigger is a Top Prescribers of Drugs Commonly Abused trigger. This trigger lists the providers who have prescribed the most amount of one of the most commonly abused drugs. An additional example of a trigger is a Mailbox Matching trigger. For each region of interest (as denoted by a City and State), this trigger lists providers who have a practice address that matches the location of a UPS drop box. An additional example of a trigger is a Frequent NPIs trigger. For each region of interest (as denoted by a City and State), this trigger lists provider locations receiving multiple NPIs in a short time frame.

### 5.0 Hardware Overview

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

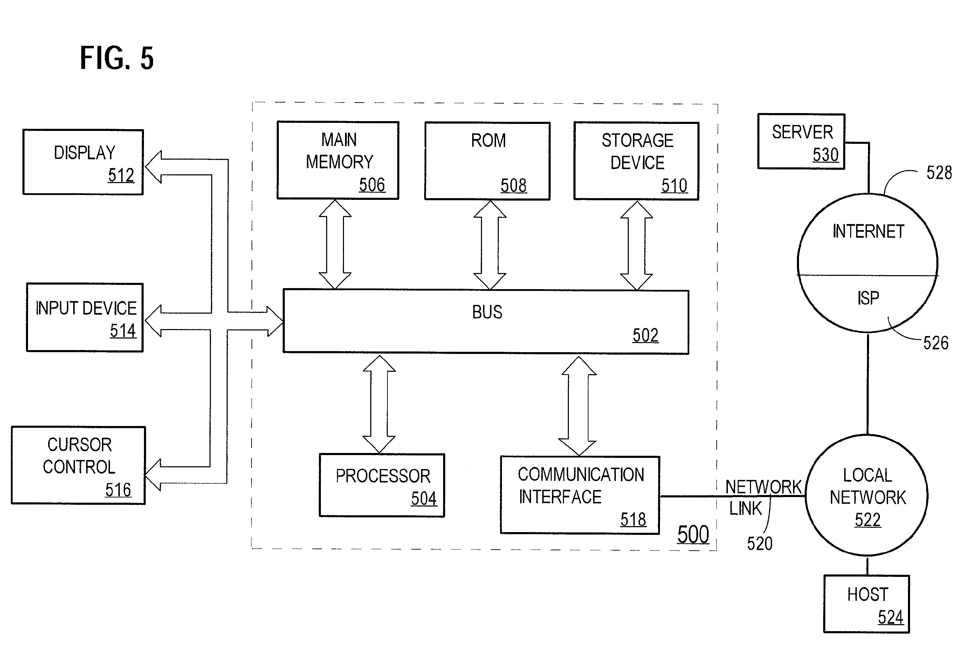

For example, FIG. 5 is a block diagram that illustrates a computer system 500 upon which embodiments of the present disclosure may be implemented. Computer system 500 includes a bus 502 or other communication mechanism for communicating information, and a hardware processor 1004 coupled with bus 502 for processing information. Hardware processor 504 may be, for example, a general purpose microprocessor.

Computer system 500 also includes a main memory 506, such as a random access memory (RAM) or other dynamic storage device, coupled to bus 502 for storing information and instructions to be executed by processor 504. Main memory 506 also may be used for storing temporary variables or other intermediate information during execution of instructions to be executed by processor 504. Such instructions, when stored in non-transitory storage media accessible to processor 504, render computer system 500 into a special-purpose machine that is customized to perform the operations specified in the instructions.

Computer system 500 further includes a read only memory (ROM) 508 or other static storage device coupled to bus 502 for storing static information and instructions for processor 504. A storage device 510, such as a magnetic disk or optical disk, is provided and coupled to bus 502 for storing information and instructions.

Computer system 500 may be coupled via bus 502 to a display 512, such as a cathode ray tube (CRT) or liquid crystal display (LCD), for displaying information to a computer user. An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

Computer system 500 may implement the techniques described herein using customized hard-wired logic, one or more ASICs or FPGAs, firmware and/or program logic which in combination with the computer system causes or programs computer system 500 to be a special-purpose machine. According to one embodiment, the techniques herein are performed by computer system 500 in response to processor 504 executing one or more sequences of one or more instructions contained in main memory 506. Such instructions may be read into main memory 506 from another storage medium, such as storage device 510. Execution of the sequences of instructions contained in main memory 506 causes processor 504 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device 510. Volatile media includes dynamic memory, such as main memory 506. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 502. Transmission media can also take the form of acoustic or light waves, such as those generated during radio-wave and infra-red data communications.

Various forms of media may be involved in carrying one or more sequences of one or more instructions to processor 504 for execution. For example, the instructions may initially be carried on a magnetic disk or solid state drive of a remote computer. The remote computer can load the instructions into its dynamic memory and send the instructions over a telephone line using a modem. A modem local to computer system 500 can receive the data on the telephone line and use an infra-red transmitter to convert the data to an infra-red signal. An infra-red detector can receive the data carried in the infra-red signal and appropriate circuitry can place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card, cable modem, satellite modem, or a modem to provide a data communication connection to a corresponding type of telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the world wide packet data communication network now commonly referred to as the "Internet" 1028. Local network 522 and Internet 528 both use electrical, electromagnetic or optical signals that carry digital data streams. The signals through the various networks and the signals on network link 520 and through communication interface 518, which carry the digital data to and from computer system 500, are example forms of transmission media.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518.

The received code may be executed by processor 504 as it is received, and/or stored in storage device 510, or other non-volatile storage for later execution.

In the foregoing specification, embodiments of the invention have been described with reference to numerous specific details that may vary from implementation to implementation. The specification and drawings are, accordingly, to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction.

## Claims

1. A method comprising:
using a first computer, responding to selection of a digitally stored health care fraud scheme template from among a plurality of health care fraud scheme templates by displaying on a computer display device a partial query statement defined by the selected health care fraud scheme template;
using a first computer, based on a parameter indicated by the selected health care fraud template, displaying on the computer display device at least one interface control element embedded within the partial query statement, the interface control element configured to receive input indicating a value for the parameter;
using a first computer, receiving, via the at least one interface control element, input indicating the value for the parameter of the partial query statement;
using a first computer, based at least on the partial query statement, the parameter, and the specified value for the parameter, generating a converted query in a database querying language that a particular database system is configured to interpret;
using a first computer, causing the particular database system to execute the converted query to identify query results comprising health care data based on the converted query;
wherein the method is performed using one or more processors.

2. The method of claim 1, wherein the partial query statement is in a natural language format that the particular database system is not configured to interpret.

3. The method of claim 1 or claim 2, wherein the at least one interface control element is located at a specific location within the partial query statement.

4. The method of claim 3, wherein the partial query statement provides context for a parameter type for the parameter.

5. The method of any of claims 1-4, wherein receiving the input comprises receiving selection of the value for the parameter from among a pre-defined list of parameter values.

6. The method of any of claims 1-5, wherein receiving the input comprises receiving a free form parameter value as the value for the parameter.

7. The method of any of claims 1-6, wherein the particular database system includes a plurality of health care data records associated with health care service or product provider claims submitted for individual members, and wherein the query results comprise at least a portion of the plurality of health care data records.

8. The method of claim 7, further comprising receiving selection of a sample dataset, the sample dataset comprising a subset of the plurality of health care data records having a known characteristic, and wherein causing the particular database system to execute the converted query to identify query results comprises identifying query results from the sample dataset.

9. The method of any of claims 1-8, wherein receiving the input comprises receiving input from a user having no or limited knowledge of the database querying language.

10. The method of any of claims 1-9, further comprising:
receiving selection of at least one sample dataset, the at least one sample dataset comprising health care claims data having known attributes;
wherein causing the particular database system to execute the converted query to identify query results comprises identifying query results from the at least one sample dataset.

11. The method of any of claims 1-10, further comprising:
receiving at least one query scheduling input associated with the partial query statement, the parameter, and the specified value for the parameter for a user;
wherein causing the particular database system to execute the converted query is triggered in accordance with the at least one query scheduling input.

12. The method of claim 11, wherein the at least one query scheduling input comprises specifying a query execution frequency, a specific date to perform a query, or a query trigger condition.

13. A system comprising:
one or more databases including a plurality of health care claims data;
a user interface component, at least partially implemented by computing hardware, receiving selection of a first pre-defined statement associated with a first health care claim fraud scheme from among a plurality of health care claim fraud schemes and receiving an indication of one or more parameter values for one or more interactive fields associated with the first pre-defined statement by the first health care claim fraud scheme, the first pre-defined statement provided in a natural language format, the one or more interactive fields located at locations within the first pre-defined statement, and the one or more parameter values customizing the first pre-defined statement;
a query generator component, at least partially implemented by computing hardware, converting the first pre-defined statement and the one or more parameter values to a query in a database querying language and searching the one or more databases using the query.

14. The system of claim 13, wherein at least one of the one or more parameter values comprises a percentage, a dollar amount, a quantitative value, a billing code, a conditional, a ratio, a logical expression, a fraction, or compound values.

15. The system of claim 13, wherein one or more terms surrounding at least one of the one or more interactive fields provide semantic context for a type of parameter to be inputted to the at least one of the one or more interactive fields.
